# NEUE EUROPÄISCHE PATENTSCHRIFT

(11) **EP 0 363 594 B2**
(45) Veröffentlichungstag und Bekanntmachung des Hinweises auf die Entscheidung über den Einspruch: **02.09.1998**
(45) Hinweis auf die Patenterteilung: 29.06.1994
(21) Anmeldenummer: 89114548.4
(22) Anmeldetag: 07.08.1989
(51) Int. Cl.: B29C 51/22, B29C 44/00, B29C 51/42, B29C 51/36

(54) **Verfahren und Vorrichtung zur Herstellung von Formteilen oder Gegenständen aus thermoverformbaren Kunststoffen nach dem Negativtiefziehverfahren**
Method and apparatus for making shaped parts or objects from thermoformable plastics using a deep-drawing technique
Procédé et dispositif de fabrication de pièces ou objets moulés en matières plastiques thermoformables avec procédé d'étirage

(30) Priorität: 11.10.1988 DE 3834604
(43) Veröffentlichungstag der Anmeldung: 18.04.1990
(73) Patentinhaber: ALKOR GMBH KUNSTSTOFFE, D-81451 München (DE)
(72) Erfinder: Landler, Josef, Chem.-Ing., D-8190 Wolfratshausen (DE)

(56) Entgegenhaltungen:
- DE-A- 1 604 539
- DE-A- 1 963 573
- DE-A- 2 256 974
- DE-A- 2 401 034
- DE-A- 3 420 922
- DE-U- 8 706 204
- GB-A- 1 396 573
- GB-A- 2 091 627
- GB-A- 2 155 392
- GB-A- 2 167 014
- US-A- 3 353 219
- PATENT ABSTRACTS OF JAPAN, Band 10, Nr. 18 (M-448)[2075], 24. Januar 1986;& JP-A-60 176 731 (INOUE EMU TEE PII K.K.) 10-09-1985
- PATENT ABSTRACTS OF JAPAN, Band 9, Nr. 198 (M-404)[1921], 15. August 1985;& JP-A-60 61 230 (INOUE EMU TEE PII K.K.) 09-04-1985
- PATENT ABSTRACTS OF JAPAN, Band 8, Nr. 258 (M-340)[1695], 27. November 1984;& JP-A-59 131 435 (BRIDGESTONE K.K.) 28-07-1984

## Beschreibung

Die vorliegende Erfindung betrifft ein Verfahren und eine Vorrichtung zur Herstellung von Formteilen oder Gegenständen aus thermoverformbaren Kunststoffbahnen, die erhitzt in eine Form eingebracht unter Verwendung eines Druckunterschiedes geformt, während des Weitertransportes oder einer Transportpause auf die gewünschten Dimensionen abgelängt oder gestanzt und hinterschäumt werden, wobei mindestens ein Schließteil für die Schäumform oder ein Schäumformdeckel, das für bzw. der der jeweiligen Form zugeordnet ist, mindestens einem Teil des karussellartig geführten Bewegungsvorganges mit unterworfen wird, wobei der Kunststoffschaum in die Form eingespritzt, eingegossen oder eingebracht und auf der Rückseite des Kunststoffteiles aufgebracht wird und während des Weitertransportes, vorzugsweise während einer Transportpause, die Öffnung der Form und nachfolgend die Ausbringung des Formteiles oder Gegenstandes erfolgt Gemäß der Erfindung werden bestimmte Verfahrens- und Temperaturführungen, Material- und Vorrichtungsauswahlen innerhalb der hintereinanderfolgenden Verfahrensschritte angewendet bzw. durchgeführt.

Ein Verfahren und eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren, wobei die Kunststoffbahn, vorzugsweise die eingespannte oder vorgespannte Kunststoffolie, kunststoffhaltige Bahn oder Kunststoffplatte, unter Mitverwendung eines Druckunterschiedes und/oder Erwärmung oder Temperierung in die Negativtiefziehform eingebracht werden, sind bereits in der nicht veröffentlichten Patentanmeldung P 37 14 366.2 beschrieben

Dabei werden die Kunststoffbahnen in der Negativtiefziehform unter Narbgebung und/oder Oberflächendekoration verformt und die Narbgebung und/oder Oberflächendekoration der Kunststoffbahn erfolgt durch eine poröse, luftdurchlässige, vorzugsweise mikroporöse, luftdurchlässige Formoberfläche aufweisende Negativtiefziehform, wobei zwischen der Werkzeugtemperatur und der Kunststoffbahn ein Temperaturunterschied von mehr als 30 K, vorzugsweise mehr als 80 K, eingehalten wird Dieses Verfahren und die Vorrichtung sollten durch die vorliegende Erfindung verbessert werden.

In der DE-OS 3128977 ist bereits ein Verfahren zur Herstellung von Verbundkörpern unter Verwendung eines aus mehreren Einzeltischen bestehenden Drehtisches beschrieben, bei dem eine Folie im Positivverfahren verformt und auf einen luftundurchlässigen Träger unter Verwendung eines allseits wirkenden Unterdruckes aufkaschiert wird. Nachteilig ist bei diesem Verfahren und bei dieser Vorrichtung u. a., daß von einem luftundurchlässigen Träger, der somit keine Ausstanzungen oder Ausnehmungen aufweisen darf, ausgegangen werden muß, daß ein allseits wirkender Unterdruck zwischen dem Träger und der vorgeformten folie vorhanden sein muß, wobei zur Herstellung eines entsprechenden Unterdruckes zwischen dem Träger und der Folie eine entsprechende unterdruckfeste Hilfsvorrichtung benötigt wird.

Darüberhinaus gelingt es nach diesem Verfahren nur, daß die Folien unmittelbar mit dem Träger mittels einer Klebeschicht in Verbindung gebracht werden, ohne daß eine Hinterschäumung ermöglicht wird. Die nach diesem Verfahren einen, Überdruck oder Atmosphärendruck bei der Verformung ausgesetzte Folienoberseite kann innerhalb dieses Verfahrens nicht geprägt oder dekoriert werden. Bei der Vorrichtung sind zusätzliche Anschlüsse an eine Unterdruckquelle zur Entlüftung der Unterseite der Folie erforderlich und die bereits vorgeformte Folie wird durch die Vorrichtung auf den Träger unmittelbar aufgelegt.

Aus dem Gebrauchsmuster DE-U-8706204 ist bereits eine Vorrichtung zur Herstellung von Formteilen oder Gegenständen aus thermoverformbaren Kunststoffolien oder Kunststoffplatten nach dem Negativtiefziehverfahren, bestehend aus einer Negativtiefziehform, die vorzugsweise mit einer Einspann- oder Vorspannvorrichtung für die Kunststoffolie versehen ist, bekannt, wobei die Negativtiefziehform mit mindestens einer Zuleitung und/oder Vorrichtung zur Ausübung eines Druckunterschiedes, vorzugsweise Vakuum und/oder Unterdruck, ausgestattet ist. Der Negativtiefziehform sind eine Auffangwanne oder ein Auffangbehälter, sowie Düsen, Spritzen oder Spritzvorrichtungen zugeordnet, deren Öffnungen und/oder Düsenwinkel auf den zur Aufnahme der Kunststoffbahn bestimmten Formraum der Negativtiefziehform gerichtet sind. Die Negativtiefziehform besitzt ebenfalls eine poröse luftdurchlässige, vorzugsweise mikroporöse luftdurchlässige, Formoberfläche, die eine metall-, metallegierungs-, mikrometallpartikelhaltige, keramikmetall- und/oder keramikmikrometallpartikelhaltige und/oder feinstteilige Füllstoffe enthaltende Schicht oder Oberfläche mit einer durchschnittlichen Metallschichtdicke oder Füllstoffpartikeldicke unter 80 µm aufweist. Bei der Anlegung eines Vakuums bei den Negativtiefziehformen gemaß DE-U-8706204 wurde nach einiger Gebrauchsdauer jedoch festgestellt, daß manchmal schon nach einigen Durchgängen, ganz oder teilweise das Negativtiefziehen nicht mehr möglich war und die Formen Verstopfungen oder sogar Beschädigungen aufwiesen.

Aus der DE-A-1963573 ist eine Vorrichtung zum Tiefziehen von thermoplastisch verformbaren Folien mit einer mit Luftlöchern ausgestatteten Formfläche bekannt, wobei diese Formflächen aus porösen Werkstoffen, insbesondere Sintermetall, bestehen Gemäß DE-A-1963573 werden jedoch die Kunststoffolien nicht vorgeheizt, sondern in einer Tiefziehform verpreßt, wobei die Kunststoffolien an den Kontaktflächen aus porösen Material, insbesondere Sintermetall, angepreßt werden.

Aus der DE-A-3420922 ist bereits eine Maschine zur Herstellung dreidimensionaler Werkstücke mit mehreren miteinander zusammenarbeitenden Stationen und Formen (Primär- und Sekundärformen) bekannt, wobei erhitzte Kunststoffplatten in den hintereinander geführten Formen bearbeitet werden.

Dabei wird eine Formgebung durchgeführt, der fixierte Formkörper kann dann beschnitten werden und zusammen mit einer weiteren Form (Sekundärform) kann auch ein Hinterschäumen erfolgen.

Über eine Temperaturführung, die Art der Formoberfläche, die Art und Zusammensetzung der verwendeten Platten wird in dieser Patentanmeldung nichts ausgesagt.

Aufgabe der vorliegenden Erfindung war es, ein verbessertes Negativtiefziehverfahren und eine verbesserte Vorrichtung zur Herstellung der Formteile oder Gegenstände, die unter Verwendung des Verfahrens hergestellt werden zu finden. Das Verfahren sollte optimiert werden bei gleichzeitiger Verlängerung der Wartungsfristen der eingesetzten Negativtiefziehformen. Die Paßgenauigkeit der Tiefziehlinge zur Schäumform sollte verbessert werden. Durch das Verfahren und die Vorrichtung sollten u. a. Zwischenlagerungen der Tiefziehlinge und/oder auftretende Dimensionsänderungen und dergleichen vermieden werden.

Erfindungsgemäß wurde festgestellt, daß diesen Aufgaben ein Verfahren zur Herstellung von Formteilen oder Gegenständen aus thermoverformbaren Kunststoffbahnen nach dem Negativtiefziehverfahren gerecht wird, wobei die Kunststoffbahnen erhitzt in eine Form eingebracht, unter Verwendung eines Druckunterschiedes geformt, während des Weitertransportes oder einer weiteren Transportpause auf die gewünschten Dimensionen gelängt oder gestanzt und hinterschäumt werden, wobei mindestens ein Schließteil für die Schäumform oder ein Schäumformdeckel, das bzw. der der jeweiligen Form zugeordnet ist, mindestens einem Teil des karussellartig geführten Bewegungsvorganges mit unterworfen wird, wobei der Kunststoffschaum in die Form eingespritzt, eingegossen oder eingebracht und auf der Rückseite des Kunststoffteiles aufgebracht wird und während des Weitertransportes, vorzugsweise während einer Transportpause, die Öffnung der Form und nachfolgend die Ausbringung des Formteiles oder Gegenstandes erfolgt.

Gemäß der Erfindung werden die Kunststoffbahnen, die im Negativtiefziehverfahren verformt werden, vor der Einbringung in die Negativtiefziehform auf eine Temperatur in der Nähe oder oberhalb des Schmelzbereiches (bis 534 K) aufgeheizt, mittels eines Rahmens eingespannt oder vorgespannt sowie unter Mitverwendung eines Druckunterschiedes unter Erwärmung oder Temperierung in die Negativtiefziehform eingebracht, in der Negativtiefziehform unter Narbgebung und/oder Oberflächendekoration verformt. Die Narbgebung und/oder Oberflächendekoration der Kunststoffbahnen erfolgt dabei durch eine mikroporöse luftdurchlässige Formoberfläche aufweisende Negativziehform, wobei zwischen der Werkzeugtemperatur und der Kunststoffbahn ein Temperaturunterschied von mehr als 50 K eingehalten wird. die Formoberfläche der Negativtiefziehform weist eine metall-, metalllegierungs-, mikrometallpartikelhaltige, keramik-metall- und/oder keramik-mikrometallpartikelhaltige Schicht oder hitzebeständige partikelhaltige Schicht oder Oberfläche mit einer durchschnittlichen Metallpartikeldicke unter 80 µm auf wobei Kunststoffbahnen verwendet werden, bei denen der Gesamtgehalt an den bei den Verformungstemperaturen flüchtigen Bestandteilen kleiner als 5 Gew.-% ist. Die heißen Kunststoffbahnen werden in den hintereinander angeordneten, karussellartig geführten Negativtiefziehformen, die auf 291 K bis 352 K abgekühlt werden, während des Transportes der Negativtiefziehform oder einer Transportpause eingebracht und negativtiefgezogen, wobei das Schließteil oder der Schäumformdeckel zusammen mit der Negativtiefziehform die Schäumform bildet und ein Träger auf den Schäumformdeckel aufgelegt wird, der auf seiner der Negativtiefziehform zugewandten Oberfläche die Form, Formteilbereiche oder Oberflächenteilbereiche der Negativtiefziehform (in Positivform) aufweist.

Der Tiefziehling bleibt mit der Folienoberseite an der Formoberfläche der Negativtiefziehform für den und während des weiteren Transport(es) und die folgenden Verarbeitungsschritte fixiert.

Während des Weitertransportes oder einer weiteren Transportpause wird der Tiefziehling auf die gewünschten Dimensionen gelängt oder gestanzt.

Mindestens ein Schließteil für die Schäumform oder ein Schäumformdeckel, das bzw. der der jeweiligen Negativtiefziehform zugeordnet ist, wird mindestens einem Teil des karussellartig geführten Bewegungsvorganges mit unterworfen und/oder ist an der Negativtiefziehform bewegbar oder schließbar angeordnet oder angekoppelt.

Danach wird das Kunststoffschaumreaktionsgemisch oder die Komponenten des auszubildenden Kunststoffschaumes in die geöffnete Negativtiefziehform oder in die mit mindestens einer Einbring- oder Einspritzöffnung versehene Schäumform gebildet, aus der Negativtiefziehform und mindestens einem Schließteil der Schäumform oder einem Schäumdeckel, eingespritzt, eingegossen oder eingebracht und auf der Rückseite der negativtiefgezogenen Kunststoffbahn aufgebracht.

Nach diesem Verfahrensschritt erfolgt bei geschlossener Form während des Weitertransportes die Schaumreaktion und/oder Ausschäumung.

Während des Weitertransportes, vorzugsweise während einer Transportpause, erfolgt die Öffnung der Schäumform und Negativtiefziehform durch Öffnen des Schließteiles oder Schäumdeckels und nachfolgend die Ausbringung des Formteiles oder Gegenstandes.

Das Schließteil oder der Schäumformdeckel, der zusammen mit der Negativtiefziehform die Schaumform bildet, weist nach einer bevorzugten Ausführungsform auf seiner der Negativtiefziehform und/oder der verformten Kunststoffbahn zugewandten Oberfläche ien Oberflächenprofilierung in Positivform und/oder einen Träger mit einer Oberflächenprofilierung in Positivform auf, die den Schaum entsprechend formt und/oder auf seiner Oberfläche profiliert.

Durch das erfindungsgemäße Verfahren und die Vorrichtung gelingt es, Dimensionsänderungen der Tiefziehlinge, die beispielsweise bei Zwischenlagerungen auftreten, zu vermeiden. Die Paßgenauigkeit der Tiefziehlinge zur Schäumform wird verbessert. Die sehr kosten- und zeitaufwendigen Arbeiten der Abstimmung der Tiefziehwerkzeuge und der Schäumwerkzeuge werden eingeschränkt oder entfallen. Da die Abstimmung der Schäumwerkzeuge untereinander und zu den Tiefziehwerkzeugen erst im Verlauf einer Serienproduktion erfolgen kann, treten sehr hohe Ausschußzahlen bei den bekannten Verformverfahren, u. a. durch Faltenbildung des Tiefziehlings in der Schäumform und/oder Konturenunschärfen am Fertigteil auf. Durch das erfindungsgemäße Verfahren und die Vorrichtung gelingt es weiterhin, das Negativtiefziehverfahren und die Negativtiefziehvorrichtung zu optimieren; der Raumbedarf für die Lagerung der Teile sowie zusätzliche Arbeitsmehraufwendungen durch Ausbringung der Tiefziehlänge, Lagern und Wiedereinbringung der Tiefziehlänge in Schäumformen und dergleichen entfallen. Es gelingt mit Hilfe des Verfahrens und der Vorrichtung verbesserte Formteile oder Gegenstände herzustellen, die u. a. ein verbessertes Dekor unter Vermeidung des Narbverzuges aufweisen.

Nach einer bevorzugten Ausführungsform wird in die karussellartig geführte Negativtiefziehform während des Transportes der Negativtiefziehform, vorzugsweise während einer Transportpause, ein Träger vor dem Einbringen des Kunststoffschaumreaktionsgemisches eingebracht. Durch die Mitverwendung eines Trägers werden Formteile oder Gegenstände verstärkt.

Nach einer bevorzugten Ausführungsform wird nach der Verfahrensstufe d) auf das Oberflächenprofilierungen aufweisende Schließteil oder auf den Oberflächenprofilierungen aufweisenden Schäumformdeckel ein Träger gelegt, der auf seiner der Negativtiefziehform zugewandten Oberfläche die Form, Formteilbereiche oder Oberflächenteilbereiche der Negativtiefziehform (in Positivform) aufweist.

Nach einer weiteren Ausführungsform erfolgt nach der Ausbringung des Formteiles oder Gegenstandes aus der Negativtiefziehform während des Weitertransportes, vorzugsweise während einer Transportpause, die Behandlung der Negativtiefziehform und/oder des Schließteiles oder des Schäumformdeckels, vorzugsweise Reinigung und/oder Trennmittelauftragung. Durch die Reinigung und/oder den Trennmittelauftrag während des Transportes oder während einer Transportpause kann der Arbeitsablauf beschleunigt und weiter optimiert werden.

Nach einer weiteren Ausführungsform des erfindungsgemäßen Verfahrens erfolgt vor der Verfahrensstufe a) eine Temperierung, vorzugsweise Kühlung der Negativtiefziehform nach der Ausbringung des Formteiles oder Gegenstandes und/oder nach der Reinigung der Negativtiefziehform. Dadurch wird die Negativtiefziehform während des Kreislaufprozesses auf den erforderlich niedrigen Temperaturbereich vor der Einbringung neuer Kunststoffolien oder Zuschnitte eingestellt.

Nach der Verfahrensstufe b) und/oder c) bleibt der Tiefziehling unter Verwendung eines Unterdruckes auf der porösen luftdurchlässigen, vorzugsweise mikroporösen luftdurchlässigen Formoberfläche der Negativtiefziehform für die weiteren Arbeitsschritte oder Arbeitsstufen bis zur erfolgten Schaumreaktion oder Öffnen des Schließteiles der Schäumform oder Schaumdeckels fixiert, wobei die Formoberfläche der Negativtiefziehform, vorzugsweise eine metall-, metallegierungs-, mikrometallpartikelhaltige, keramik-metall- und/oder keramik-mikro-metallpartikelhaltige Schicht oder hitzebeständige partikelhaltige Schicht oder Oberfläche mit einer durchschnittlichen Metallpartikeldicke unter 80 µm, vorzugsweise unter 60 m, aufweist.

Nach einer weiteren Ausführungsform wird bei der Ausbringung des Formteiles oder Gegenstandes die zwei- oder mehrteilige Negativtiefziehform ganz oder in Teilbereichen geöffnet. Die Ausführungsform wird z. B. bei schwer zu entformenden Hinterschneidungen angewendet.

Die vorliegende Erfindung betrifft weiterhin eine Vorrichtung zur Herstellung von Formteilen oder Gegenständen aus thermoverformbaren Kunststoffbahnen, wobei mehrere Formen unmittelbar oder mittelbar hintereinander angeordnet sind und mittels eines Motors oder einer anderen Vorrichtung zur Durchführung einer Zwangsbewegung karussellartig geführt und zur Durchführung von Fertigungsschritten ausgebildet sind. Gemäß der Erfindung bestehen die Formen aus Negativtiefziehformen, die vorzugsweise mit einer Einspann- oder Vorspannvorrichtung für die Kunststoffbahnen versehen sind, wobei die Negativtiefziehformen mit mindestens einer Zuleitung und/oder Vorrichtung zur Ausübung eines Druckunterschiedes, vorzugsweise Vakuum und/oder Unterdruck, ausgestattet sind und eine poröse luftdurchlässige, vorzugsweise mikroporöse luftdurchlässige, Formoberfläche besitzen, die eine metall-, metallegierungs-, mikro-metallpartikelhaltige, keramik-metall- und/oder keramik-mikro-metallpartikelhaltige und/oder feinstteilige Füllstoffe enthaltende Schicht oder Oberfläche mit einer durchschnittlichen Metallschichtdicke oder Metallpartikeldicke und/oder Partikeldicke unter 80 µm, vorzugsweise unter 60 µm, oder eine nicht poröse Formoberfläche aufweisen. Mindestens ein Schließteil für die Schäumform oder ein Schäumformdeckel ist der jeweiligen Negativtiefziehform zugeordnet und wird mindestens einem Teil des karussellartig geführten Bewegungsvorganges mit unterworfen und/oder ist der Negativtiefziehform bewegbar oder schließbar angeordnet oder ankoppelbar, wobei das Schließteil oder der Schäumformdeckel zusammen mit der Negativtiefziehform die Schaumform bildet und auf dem Schäumformdeckel ein Träger angeordnet ist, der auf seiner der Negativtiefziehform zugewandten Oberfläche die Form, Formteilbereiche oder Oberflächenteilbereiche der Negativtiefziehform (in Positivform) aufweist, wobei in der Nähe mindestens einer karussellartig angeordneten Negativtiefziehform eine Übergabevorrichtung zur Anbringung der Schließteile oder der Schäumformdeckel und/oder Träger vor dem Einbringen des Kunststoffschaumreaktionsgemisches angeordnet ist.

Das Schließteil oder der Schäumformdeckel, der zusammen mit der Negativtiefziehform die Schaumform bildet, weist nach einer bevorzugten Ausführungsform auf seiner der Negativtiefziehform und/oder der verformten Kunststoffbahn zugewandten Oberfläche eine Oberflächenprofilierung in Positivform auf. Dadurch gelingt es, der Schaumrückseite (die nicht an die verformte Kunststoffbahn angrenzt) die gewünschte Profilierung gleichzeitig zu geben.

Bevorzugt ist in der Nähe mindestens einer karussellartig angeordneten Negativtiefziehform eine Übergabevorrichtung zur Anbringung der Schließteile oder der Schäumformdeckel und/oder Träger vor dem Einbringen des Kunststoffschaumreaktionsgemisches angebracht. Bevorzugt wird der Träger auf den Schäumdeckel aufgelegt und ist vorgeformt. Dadurch profiliert er ganz oder teilweise den Schaum, sobald die Form geschlossen ist und die Ausschäumung beginnt.

Zweckmäßig ist in der Nähe mindestens einer Negativtiefziehform eine Auswerfvorrichtung oder Ausbringvorrichtung für die fertigen Gegenstände und/oder eine Behandlungsvorrichtung für die Negativtiefziehform, vorzugsweise eine Reinigungs- und/oder Trermmittelauftragsvorrichtung, angeordnet.

Bei Gegenständen oder Formteilen, die mindestens eine Hinterschneidung aufweisen und schwer zu entformen sind, besteht die Negativtiefziehform und/oder das die Negativtiefziehform umgebende Werkzeug aus zwei oder mehreren trenn- und schließbaren Teilen.

Nach einer bevorzugten Ausführungsform ist die Negativtiefziehform, vorzugsweise die poröse oder mikroporöse Schichten aufweisende Negativtiefziehform, in einem Halte- oder Transportkasten oder einer anderen dichten ode transportfähigen Vorrichtung gelagert, die keine poröse Strukturen aufweist, druckabgedichtet ist sowie Zuführungen, Anschlüsse und dergleichen für das Anlegen des Vakuums aufweist.

Vor dem Einbringen in die Negativtiefziehform läuft die Kunststoffbahn zwischen mindestens je einer Heizstation, die beidseitig der Kunststoffbahn angeordnet sind, sowie vorzugsweise mindestens je einer Vorheizstation hindurch, um auf die Verformungstemperatur zu gelangen.

Zwischen der Werkzeugtemperatur und der Kunststoffolie, kunststoffhaltigen Bahn oder Kunststoffplatte wird, wie bereits erwähnt, ein Temperaturunterschied von mehr als 30 K, vorzugsweise mehr als 80 K, eingehalten.

Die Kunststoffolie, kunststoffhaltige Bahn oder Kunststoffplatte wird vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 534 K oder darüber aufgeheizt, während die Werkzeugtemperatur um mehr als 30 K, vorzugsweise um mehr als 80 K, unter dem Schmelzpunkt, dem Schmelzbereich oder der Schmelztemperatur oder Erweichungstemperatur oder Kunststoffolie, kunststoffhaltigen Bahn oder Kunststoffplatte eingestellt wird.

Im Unterschied zu dem Positivtiefziehverfahren kann das erfindungsgemäße Verfahren verschiedene Muster des Urmodels wiedergeben, so z. B. zwei oder mehrere Arten von Narben, Ziernähten, Buchstaben, Designs, Knöpfen und/oder Holznarben oder anderen Strukturierungen.

Die verwendbaren Kunststoffbahnen, -folien oder -platten bestehen aus an sich bekannten Kunststoffen, jedoch auch aus geschäumten Kunstleder, PVC-Schaum oder Polyolefin-Schaumlaminaten oder geschäumten Kunstleder oder sind nicht geschäumte Folien, Bahnen oder Platten.

Bevorzugt werden im Negativtiefziehverfahren emissionsarme Kunststoffolien, kunststoffhaltige Bahnen oder Kunststoffplatten verformt, wobei der Gesamtgehalt der bei der Verformungstemperatur und Verformungszeit flüchtigen Bestandteile kleiner als 5 Gew.-%, vorzugsweise Kleiner als 2 Gew.-%, ist.

Durch diese Ausführungsform wird sichergestellt, daß die poröse, vorzugsweise mikroporöse Negativtiefziehform funktionsfähig bleibt und eine nicht gewünschte Verstopfung der Mikroporen weitgehend vermieden wird.

Der Kunststoff, die Kunststoffmischung oder Kunststofflegierung der emissionsarmen Kunststoffolien, kunststoffhaltigen Bahnen oder Kunststoffplatten besteht bevorzugt aus Vinylchloridhomo- oder -copolymerisat, vorzugsweise in Kombination mit einem plastifizierenden und/oder elastomermodifizierten Thermoplasten; aus einem Olefinhomo- und/oder -copolymerisat, chloriertem Polyethylen, Ethylen-Propylen-Copolymerisat (EPM), Ethylen-Propylen-Dien-Polymerisat (EPDM), thermoplastischen Polyester, thermoplastischen Polyurethan, kautschukartigen Polyesterurethan und/oder Polyvinylidenfluorid oder enthält einen dieser Kunststoffe als Bestandteil.

Nach einer Ausführungsform des Verfahrens weist der Stempel auch ganz oder teilweise Seitenwände oder Seitenwandbereich des herzustellenden Formteiles oder Gegenstandes und/oder die Profilierungen des Trägers auf.

Nach einer weiteren bevorzugten Ausführungsform wird die Entformung durch oder unter Mitverwendung eines Blas- oder Gasdruckes durchgeführt, wobei eine Erleichterung der Entformung, insbesondere in kritischen Bereichen (Hinterschneidungen) ermöglicht wird.

Nach einer weiteren bevorzugten Ausführungsform wird die heiße Kunststoffbahn auf eine Verformungstemperatur so erhitzt, daß bei der Einbringung in die Negativtiefziehform eine Temperaturdifferenz von mehr als 50 K, vorzugsweise mehr als 100 K, zwischen den heißen Kunststoffolien und der kälteren Negativtiefziehform eingehalten wird und während oder nach der Thermoverformung in der Negativtiefziehform der verformte Gegenstand abkühlt, vorzugsweise unter Verwendung einer Temperaturdifferenz von mehr als 50 K, vorzugsweise mehr als 100 K (bezogen auf die Temperatur der Kunststoffbahn unmittelbar vor der Einbringung in die Negativtiefziehform).

Nach dem erfindungsgemäßen Verfahren wird die Kunststoffolie oder Kunststoffbahn im Zustand hoher Temperaturwerte innerhalb des thermoplastischen Bereiches (oder auch darüber) bei Berührung der Oberfläche des Negativtiefziehwerkzeuges in die poröse, vorzugsweise mikroporöse und/oder mikroskopische Oberflächenfeinstrukturen sowie gegebenenfalls zusätzlich Dekorstrukturen aufweisende Negativtiefziehform hineingepreßt und/oder angesaugt, thermoverformt und nimmt dabei die dekorative Oberfläche, eine Feinnarbung und/oder Strukturierung an. Nach einer weiteren bevorzugten Ausführungsform erfolgt die Vorformung oder Verformung der Kunststoffbahn unter Mitverwendung eines Stempels.

Gemäß einer weiteren bevorzugten Ausführungsform der Erfindung wird die Kunststoffolie, kunststoffhaltige Bahn oder Kunststoffplatte vor der Einbringung in die Negativtiefziehform auf eine Temperatur in der Nähe oder oberhalb des Schmelzbereiches, Schmelzpunktes bis 534 K oder auf eine Temperatur innerhalb des thermoplastischen Bereiches (bis 534 K) aufgeheizt und die Werkzeugtemperatur (Temperatur der Negativtiefziehform) auf 291 K bis 352 K, vorzugsweise 298 K bis 349 K, unter Kühlung oder Temperierung der Negativtiefziehform eingestellt.

Die Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren besteht aus Negativtiefziehformen, die vorzugsweise mit einer Einspann- oder Vorspannvorrichtung für die Kunststoffolie, kunststoffhaltige Bahn oder Kunststoffplatte versehen sind, wobei die Negativtiefziehform mit mindestens einer Zuleitung und/oder Vorrichtung zur Ausübung eines Druckunterschiedes, vorzugsweise Vakuum und/oder Unterdruck ausgestattet ist. Die Negativtiefziehform besitzt dabei eine poröse luftdurchlässige, vorzugsweise mikroporöse luftdurchlässige, Formoberfläche, die eine metall-, metallegierungs-, mikrometallpartikelhaltige, keramik-metall- und/oder keramik-mikro-metallpartikelhaltige und/oder feinstteilige Füllstoffe enthaltende Schicht oder Oberfläche mit einer durchschnittlichen Partikeldicke unter 150 µm aufweist und die Negativtiefziehform in Kombination mit einer Zuleitungsvorrichtung und/oder Abzugsvorrichtung für die Kunststoffolie, -bahn oder -platte oder Transportvorrichtung für das hergestellte verformte Formteil oder den Gegenstand steht.

Der Negativtiefziehform ist als Gegenwerkzeug ein Stempel oder eine ähnliche Vorrichtung zugeordnet. Der Stempel weist die Form oder Formteilbereiche der Negativtiefziehform (in Positivform) auf.

Die Negativtiefziehform enthält mindestens eine Oberflächenschicht als Formoberfläche, die aus einem Bindemittel, einem nicht wärmeleitenden oder schiecht wärmeleitenden anorganisch-chemischen feinteiligen Füllstoff, vorzugsweise Keramikpulver, mit einer mittleren Teilchengröße unter 80 µm, vorzugsweise unter 50 µm, sowie einem keramikmetallpartikelhaltigen, feinteiligen Pulver oder pulverförmigen Gemisch mit einer durchschnittlichen Partikeldicke unter 80 µm, vorzugsweise unter 60 µm, besteht.

Das Gewichtsverhältnis des nicht wärmeleitenden oder schlecht wärmeleitenden anorganisch-chemischen Füllstoffes zu dem feinstteiligen Metallpulver, Metallegierungspulver, keramikmetall- oder mikro-metallpartikelhaltigen Pulver beträgt 12 : 1 bis 1 : 12, vorzugsweise 5 : 1 bis 1 : 5 (in der Verformungsoberflächenschicht oder Negativtiefziehform).

In der Oberflächenschicht sind nach einer bevorzugten Ausführungsform zusätzlich Fasern aus anorganisch-chemischem Material, vorzugsweise Glasfasern, enthalten.

Die mittlere Teilchengröße (bezogen auf die Formoberflächenschicht) des anorganischchemisch feinteiligen Füllstoffes zu dem feinteiligen Metallpulver steht im Verhältnis von 3 : 1 bis 1 : 10, vorzugsweise 1 : 1 bis 1 : 3. Nach einer anderen Ausführungsform sind die Metall- oder Keramikpartikel durch andere feuerfeste oder temperaturbeständige Partikel ganz oder teilweise ersetzt.

Die Negativtiefziehform und der Stempel sind nach einer Ausführungsform in einer mit Unterdruck oder mit Überdruck beaufschlagbaren Formkammer angeordnet.

### Zeichnungsbeschreibung

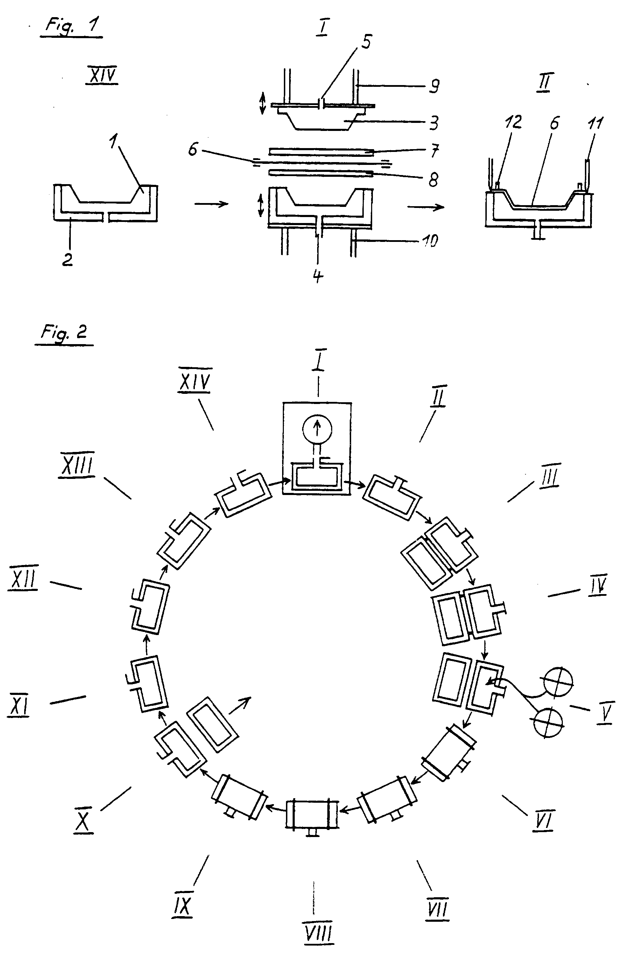

In den Figuren 1 und 2 sind Ausführungsformen des erfindungsgemäßen Verfahrens und der erfindungsgemäßen Vorrichtung schematisch dargestellt.

In Figur 1 (XIV) ist die Negativtiefziehform 1 (mit der Haltevorrichtung (2)) für die Negativtiefziehform dargestellt.

Nach Figur 1 (I) wird die Kunststoffbahn 6 mittels eines Rahmens eingespannt und durch die Heizvorrichtungen (7, 8) auf die Verformungstemperatur gebracht.

Nach Wegfahren der Heizvorrichtung erfolgt ein Abdichten zur Negativtiefziehform. Der Stempel (3) bewirkt ein Vorformen der Kunststoffbahn und ist mit einer bewegbaren Führung (9) sowie einer Anschlußvorrichtung zur Anlegung eines Druckes und/oder Unterdruckes versehen. Die vorgeformte Kunststoffbahn wird unter Anlegung, vorzugsweise eines Unterdruckes, an der Negativtiefziehform unter Narb- und/oder Dekorgebung angelegt und verformt. Die Negativtiefziehform und/oder der Untertisch (dem die Negativtiefziehform angeordnet ist) ist mit einer bewegbaren Führung (10) versehen.

In Figur 1 (II) wird dargestellt, daß die verformte Kunststoffbahn unter Aufrechterhaltung eines Unterdruckes und/oder durch das teilweise Eindringen des Kunststoffmaterials der Kunststoffolienbahn in die poröse Struktur der Negativtiefziehform und/oder durch die Oberflächenprofilierung der Negativtiefziehform selbst in der Negativtiefziehform auch während des Weitertransportes fixiert bleibt. Durch die Stanz- oder Schneidevorrichtung (11) wird der durch den Rahmen (12) an der Negativtiefziehform abgedichtete Negativtiefziehling (6) abgetrennt.

In der Figur 2 werden karussellartige Führungen sowie die dazu erforderlichen Vorrichtungen schematisch dargestellt. In der Arbeitsstufe (I) erfolgen die in der Figur 1 (I) dargestellten Verfahrensmaßnahmen.

Nach dem Weitertransport der Negativtiefziehform wird in der Verfahrensstufe 2 der Negativtiefziehling entsprechend der Figurenbeschreibung 1 (II) bearbeitet bzw. behandelt. In der Arbeitsstufe III wird mindestens ein Schließteil für die Schäumform oder einen Schäumformdeckel, das bzw. der der jeweiligen Negativtiefziehform zugeordnet ist, an die Negativziehform angekoppelt oder schließbar angeordnet. In der Arbeitsstufe IV wird auf den Schäumformdeckel oder auf das Schließteil für die Schäumform ein Träger aufgebracht oder aufgelegt. Nach dem Weitertransport wird gemäß Arbeitsstufe V das Kunststoffschaumreaktionsgemisch oder die Komponenten des auszubildenden Kunststoffschaumes in die geöffnete Negativtiefziehform eingebracht und die Negativtiefziehform mit dem Schäumformdeckel oder dem Schließteil verschlossen. Nach oder während des Weitertransportes erfolgt in den Arbeitsstufen VI bis IX die Schaumreaktion und/oder Ausschäumung. In der Arbeitsstufe X wird der Schäumformdeckel oder das Schließteil für die Schäumform geöffnet, gegebenenfalls abgekoppelt und der von der Negativtiefziehform auf den hinterschäumten Tiefziehling ausgeübte Unterdruck aufgehoben. In den weiteren Arbeitsstufen wird der hinterschäumte Tiefziehling entnommen (Verfährensstufe XI); die Negativtiefziehform wird nach oder während des Weitertransportes gereinigt und/oder mit Trennmitteln oder sonstigen Behandlungsmitteln versehen (Arbeitwsstufe XII), in den folgenden Arbeitsstufen abgekühlt und auf den erneuten Negativtiefziehformvorgang vorbereitet.

## Patentansprüche

1. Verfahren zur Herstellung von Formteilen oder Gegenständen aus thermoverformbaren Kunststoffbahnen, die erhitzt in eine Form eingebracht, unter Verwendung eines Druckunterschiedes geformt, während des Weitertransportes oder einer weiteren Transportpause auf die gewünschten Dimensionen abgelängt oder gestanzt und hinterschäumt werden, wobei mindestens ein Schließteil für die Schäumform oder ein Schäumformdeckel, das bzw. der der jeweiligen Form zugeordnet ist, mindestens einem Teil des karussellartig geführten Bewegungsvorganges mit unterworfen wird, wobei der Kunststoffschaum in die Form eingespritzt, eingegossen oder eingebracht und auf der Rückseite des Kunststoffteiles aufgebracht wird und während einer Transportpause, die Öffnung der Form und nachfolgend die Ausbringung des Formteiles oder Gegenstandes erfolgt, dadurch gekennzeichnet, daß Kunststoffbahnen, die im Negativtiefziehverfahren verformt werden, vor der Einbringung in die Negativtiefziehform auf eine Temperatur in der Nähe oder oberhalb des Schmelzbereiches (bis 534 K) aufgeheizt, mittels eines Rahmens eingespannt oder vorgespannt sowie unter Mitverwendung eines Druckunterschiedes unter Erwärmung oder Temperierung in die Negativtiefziehform eingebracht, in der Negativtiefziehform unter Narbgebung und/oder Oberflächendekoration verformt werden und die Narbgebung und/oder Oberflächendekoration der Kunststoffbahnen durch eine mikroporöse, luftdurchlässige Formoberfläche aufweisende Negativziehform erfolgt, wobei zwischen der Werkzeugtemperatur und der Kunststoffbahn ein Temperaturunterschied von mehr als 50 K eingehalten wird und die Formoberfläche der Negativtiefziehform eine metall-, metallegierungs-, mikrometallpartikelhaltige, keramik-metall- und/oder keramik-mikrometallpartikelhaltige Schicht oder hitzebeständige partikelhaltige Schicht oder Oberfläche mit einer durchschnittlichen Metallpartikeldicke unter 80 µm aufweist, wobei Kunststoffbahnen verwendet werden, bei denen der Gesamtgehalt an den bei den Verformungstemperaturen flüchtigen Bestandteilen kleiner als 5 Gew.-% und die heißen Kunststoffbahnen in den hintereinander angeordneten, karussellartig geführten Negativtiefziehformen, die auf 291 K bis 352 K abgekühlt werden, während des Transportes der Negativtiefziehform oder einer Transportpaus eingebracht und negativtiefgezogen werden, wobei das Schließteil oder der Schäumformdeckel zusammen mit der Negativtiefziehform die Schäumform bildet und ein Träger auf den Schäumformdeckel aufgelegt wird, der auf seiner der Negativtiefziehform zugewandten Oberfläche die Form, Fomteilbereiche oder Oberflächenteilbereiche der Negativtiefziehform (in Positivform) aufweist.

2. Verfahren nach Anspruch 1, dadurch gekennzeichnet, daß in die karuessellartig geführte Negativtiefziehform während des Transportes der Negativtiefziehform, vorzugsweise während einer Transportpause, ein Träger vor dem Einbringen des Kunststoffschaumreaktionsgemisches eingebracht wird.

3. Verfahren nach Ansprüchen 1 bis 2, dadurch gekennzeichnet, daß nach der Ausbringung des Formteiles oder Gegenstandes aus der Negativtiefziehform während des Weitertransportes, vorzugsweise während einer Transportpause, die Behandlung der Negativtiefziehform und/oder des Schließteiles oder des Schaumformdeckels, vorzugsweise die Reinigung und/oder eine Trennmittelauftragung, erfolgt.

4. Verfahren nach einem oder mehreren der Ansprüche 1 bis 3, dadurch gekennzeichnet, daß eine Kühlung der Negativtiefziehform nach der Ausbringung des Formteiles oder Gegenstandes und/oder nach der Reinigung der Negativtiefziehform erfolgt.

5. Verfahren nach einem oder mehreren der Ansprüche 1 bis 4, dadurch gekennzeichnet, daß bei der Ausbringung des Formteiles oder Gegenstandes die zwei- oder mehrteilige Negativtiefziehform ganz oder in Teilbereichen geöffnet wird

6. Vorrichtung zur Herstellung von Formteilen oder Gegenständen aus thermoverformbaren Kunststoffbahnen, wobei mehrere Formen unmittelbar oder mittelbar hintereinander angeordnet sind und mittels eines Motors oder einer anderen Vorrichtung zur Durchführung einer Zwangsbewegung karussellartig geführt und zur Durchführung von Fertigungsschritten ausgebildet sind, dadurch gekennzeichnet, daß die Formen aus Negativtiefziehformen bestehen, die vorzugsweise mit einer Einspann- oder Vorspannvorrichtung für die Kunststoffbahnen ausgestattet sind, wobei die Negativtiefziehformen mit mindestens einer Zuleitung und/oder Vorrichtung zur Ausübung eines Druckunterschiedes, vorzugsweise Vakuum und/oder Unterdruck ausgestattet sind und eine poröse, luftdurchlässige, vorzugsweise mikroporöse, luftdurchlässige Formoberfläche besitzt, die eine metall-, metallegierungs-, mikrometallpartikelhaltige, keramik-metall- und/oder keramik-mikrometallpartikelhaltige und/oder feinstteilige Füllstoffe enthaltende Schicht oder Oberfläche mit einer durchschnittlichen Metallschichtdicke oder Metallpartikeldicke und/oder Partikeldicke unter 80 µm, vorzugsweise unter 60 µm, oder eine nicht poröse Formoberfläche aufweisen, daß mindestens ein Schließteil für die Schäumform oder ein Schäumformdeckel der jeweiligen Negativtiefziehform zugeordnet ist und mindestens einem Teil des karrussellatig geführten Bewegungsvorganges mit unterworfen wird oder schließbar angeordnet ist oder ankoppelbar ist, wobei das Schließteil oder der Schäumformdeckel zusammen mit der Negativtiefziehform die Schäumform bildet und auf dem Schäumformdeckel ein Träger angeordnet ist, der auf seiner der Negativtiefziehform zugewandten Oberfläche die Form, Fomteilbereiche oder Oberflächenteilbereiche der Negativtiefziehform (in Positivform) aufweist, wobei in der Nähe mindestens einer karussellartig angeordneten Negativtiefziehform eine Übergabevorrichtung zur Anbringung der Schließteile oder der Schäumformdeckel und/oder Träger vor dem Einbringen des Kunststoffschaumreaktionsgemisches angeordnet ist.

7. Vorrichtung nach Anspruch 6, dadurch gekennzeichnet, daß in der Nähe mindestens einer Negativtiefziehform eine Auswerfvorrichtung oder Ausbringvorrichtung für die fertigen Gegenstände und/oder eine Behandlungsvorrichtung für die Negativtiefziehform, vorzugsweise eine Reinigungs- und/oder Trennmittelauftragsvorrichtung, angordnet ist.

8. Vorrichtung nach Ansprüchen 6 und 7, dadurch gekennzeichnet, daß die Negativtiefziehform und/oder das die Negativtiefziehform umgebende Werkzeug aus zwei oder mehreren trenn- und schließbaren Teilen besteht.

9. Vorrichtung nach einem oder mehreren der Ansprüche 6 bis 8, dadurch gekennzeichnet, daß der Schäumformdeckel auf seiner der Negativtiefziehform und/oder der verformten Kunststoffbahn zugewandten Oberfläche eine Oberflächenprofilierung in Positivform aufweist.

## Claims

1. Process for producing mouldings or articles from thermoformable plastic webs which are introduced heated into a mould, are moulded using a pressure difference, during further transport or during a further transport break are cut or punched to the desired dimensions and are backed by foaming, at least one closing part for the foaming mould or a foaming mould cover which is assigned to the respective mould being co-subjected to at least part of the movement, driven in a carousel-like manner, the plastic foam being injected, poured or introduced into the mould and being applied to the reverse side of the plastic part and the opening of the mould and subsequently the removal of the moulding or article take place during a transport break, characterized in that plastic webs which are formed by the negative thermoforming process, are heated to a temperature in the vicinity of or above the melting range (up to 534 K) before their introduction into the negative thermoforming mould, are clamped or pretensioned by means of a frame and are introduced into the negative thermoforming mould, with the assistance of a pressure difference, with heating or temperature control, are formed in the negative thermoforming mould with graining and/or surface decoration and that the graining and/or surface decoration of the plastic webs is carried out by means of a negative thermoforming mould having a microporous, air-permeable mould surface, a temperature difference of more than 50 K being maintained between the tool temperature and the plastic web, and the mould surface of the negative thermoforming mould having a layer containing metal particles, metal alloy particles, metal microparticles, ceramic/metal particles and/or ceramic particles/metal microparticles or having a heat-resistant particle-containing layer or surface with an average metal particle thickness below 80 µm, plastic webs being used in which the total content of components which are volatile at the forming temperatures is less than 5% by weight and the hot plastic webs are introduced and negatively thermoformed, during the transport of the negative thermoforming mould or during a transport break, in the negative thermoforming moulds which are arranged one behind the other, are driven in a carousel-like manner and are cooled to 291 K to 352 K, the closing part or the foaming mould cover, together with the negative thermoforming mould, forming the foaming mould, and a support which has, on its surface facing the negative thermoforming mould, the form, form sub-regions or surface sub-regions of the negative thermoforming mould (in positive form) is laid onto the foaming mould cover.

2. Process according to Claim 1, characterized in that, during the transport of the negative thermoforming mould, preferably during a transport break, a support is introduced into the negative thermoforming mould driven in a carousel-like manner, before the introduction of the plastic-foam reaction mixture.

3. Process according to Claims 1 and 2, characterized in that the treatment of the negative thermoforming mould and/or of the closing part or of the foaming mould cover, preferably the cleaning and/or a release-agent application, are carried out after the removal of the moulding or article from the negative thermoforming mould, during the further transport, preferably during a transport break.

4. Process according to one or more of Claims 1 to 3, characterized in that a cooling of the negative thermoforming mould is carried out after the removal of the moulding or article and/or after the cleaning of the negative thermoforming mould.

5. Process according to one or more of Claims 1 to 4, characterized in that with the removal of the moulding or article, the at least two-part negative thermoforming mould is opened entirely or in sub-regions.

6. Device for the production of mouldings or articles from thermoformable plastic webs, a plurality of moulds being arranged directly or indirectly one behind the other and being driven in a carousel-like manner by means of a motor or another device for executing a positive motion and are designed for carrying out production steps, characterized in that the moulds consist of negative thermoforming moulds which preferably have a clamping or pretensioning device for the plastic webs, the negative thermoforming moulds being equipped with at least one feedline and/or device for exerting a pressure difference, preferably vacuum and/or subatmospheric pressure, and possessing a porous, air-permeable, preferably microporous, air-permeable, mould surface which has a layer or surface containing metal particles, metal alloy particles, metal microparticles, ceramic/metal particles and/or ceramic particles/metal microparticles and/or extremely finely divided fillers, with an average metal layer thickness or metal particle thickness and/or particle thickness of below 80 µm, preferably below 60 µm, or a non-porous mould surface, in that at least one closing part for the foaming mould or a foaming mould cover is assigned to the respective negative thermoforming mould and is co-subjected to at least a part of the movement, driven in a carousel-like manner, or is arranged in a closable manner or can be coupled, the closing part or the foaming mould cover, together with the negative thermoforming mould, forming the foaming mould, and a support which has, on its surface facing the negative thermoforming mould, the form, form sub-regions or surface sub-regions of the negative thermoforming mould (in positive form) is arranged on the foaming mould cover, wherein a transfer device for mounting the closing parts or the foaming mould covers and/or supports is arranged in the vicinity of at least one negative thermoforming mould, arranged in a carousel-like manner, before the introduction of the plastic-foam reaction mixture.

7. Device according to Claim 6, characterized in that an ejector device or removal device for the finished articles and/or a treatment device for the negative thermoforming mould, preferably a cleaning and/or release agent application device, is arranged in the vicinity of at least one negative thermoforming mould.

8. Device according to Claims 6 and 7, characterized in that the negative thermoforming mould and/or the moulding tool surrounding the negative thermoforming mould consists of two or more separable and closable parts.

9. Device according to one or more of Claims 6 to 8, characterized in that the foaming mould cover has, on its surface facing the negative thermoforming mould and/or the formed plastic web, a surface profiling in positive form.

## Revendications

1. Procédé pour la fabrication d'éléments moulés ou d'objets à partir de bandes thermoformables en matière synthétique qui sont introduites dans un moule à l'état chauffé, qui sont formées en utilisant une différence de pression, qui sont mises à longueur ou découpées aux dimensions désirées au cours du transport ultérieur ou pendant une pause ultérieure au cours du transport et derrière lesquelles on applique une mousse, dans lequel au moins un élément de fermeture pour le moule de moussage ou un couvercle du moule de moussage, qui est associé au moule respectif, est soumis de manière conjointe à au moins une partie du processus de déplacement guidé en forme de carrousel; dans lequel la mousse synthétique est injectée, coulée ou introduite dans le moule et appliquée sur le côté arrière de l'élément en matière synthétique, l'ouverture du moule et, de manière consécutive, l'enlèvement de l'élément moulé ou de l'objet ayant lieu pendant une pause au cours du transport, caractérisé en ce que des bandes en matière synthétique, qui sont formées dans le procédé d'emboutissage négatif, sont chauffées - avant leur introduction dans le moule d'emboutissage négatif - à une température à proximité du ou supérieure au domaine de fusion (jusqu'à 534 K), sont tendues ou soumises à une tension préalable au moyen d'un cadre et sont introduites dans le moule d'emboutissage négatif en étant chauffées ou en étant soumises à un recuit, avec utilisation conjointe d'une différence de pression, sont formées dans le moule d'emboutissage négatif en leur conférant un grainage et/ou une décoration superficielle, le grainage et/ou la décoration superficielle des bandes en matière synthétique ayant lieu à l'aide d'un moule d'emboutissage négatif présentant une surface de moulage microporeuse perméable à l'air, dans lequel on maintient une différence de température de plus de 50 K entre la température du moule et celle de la bande en matière synthétique, et la surface de moulage du moule d'emboutissage négatif présente une couche contenant des particules métalliques, des particules d'alliages métalliques, des particules micrométalliques, des particules céramiques-métalliques et/ou céramiques-micrométalliques, ou encore une couche ou surface stable à la chaleur dont l'épaisseur moyenne des particules métalliques est inférieure à 80 µm, dans lequel on utilise des bandes en matière synthétique dont la teneur totale en constituants volatils aux températures de formage est inférieure à 5% en poids et les bandes chaudes en matière synthétique, au cours du transport du moule d'emboutissage négatif ou pendant une pause au cours du transport, sont introduites dans les moules d'emboutissage négatif disposés l'un derrière l'autre et guidés à la manière d'un carrousel, qui sont refroidis à une température de 291 K à 352 K, et sont soumises à un moulage par emboutissage négatif, dans lequel l'élément de fermeture ou le couvercle du moule de moussage forme le moule de moussage conjointement avec le moule d'emboutissage négatif et un support est appliqué sur le couvercle du moule de moussage, qui, sur sa surface orientée vers le moule d'emboutissage négatif, présente (en positif) la forme, des zones partielles de la forme ou encore des zones partielles de la surface du moule d'emboutissage négatif.

2. Procédé selon la revendication 1, caractérisé en ce qu'on introduit un support dans le moule d'emboutissage négatif guidé à la manière d'un carrousel avant l'introduction du mélange réactionnel de moussage en matière synthétique, au cours du transport du moule d'emboutissage négatif, de préférence pendant une pause au cours du transport.

3. Procédé selon les revendications 1 à 2, caractérisé en ce que, après l'enlèvement de l'élément moulé ou de l'objet hors du moule d'emboutissage négatif, au cours du transport ultérieur de préférence pendant une pause au cours du transport, a lieu le traitement du moule d'emboutissage négatif et/ou de l'élément de fermeture ou du couvercle du moule de moussage, de préférence le nettoyage et/ou l'application d'un agent de démoulage.

4. Procédé selon l'une ou plusieurs des revendications 1 à 3, caractérisé en ce qu'un refroidissement du moule d'emboutissage négatif a lieu après l'enlèvement de l'élément moulé ou de l'objet et/ou après le nettoyage du moule d'emboutissage négatif

5. Procédé selon l'une ou plusieurs des revendications 1 à 4, caractérisé en ce que, lors de l'enlèvement de l'élément moulé ou de l'objet, on ouvre complètement ou dans des zones partielles le moule d'emboutissage négatif constitué par deux parties ou par plusieurs parties.

6. Dispositif pour la fabrication d'éléments moulés ou d'objets à partir de bandes thermoformables en matière synthétique, dans lequel plusieurs moules sont disposés directement ou indirectement l'un derrière l'autre et sont guidés à la manière d'un carrousel au moyen d'un moteur ou d'un autre dispositif pour la mise en oeuvre d'un mouvement forcé et sont réalisés pour la mise en oeuvre d'étapes de fabrication, caractérisé en ce que les moules sont constitués par des moules d'emboutissage négatif qui sont équipés de préférence d'un dispositif de tension ou de prétension pour les bandes en matière synthétique, dans lequel les moules d'emboutissage négatif sont équipés d'au moins une conduite d'amenée et/ou d'un dispositif pour établir une différence de pression, de préférence un vide et/ou une sous-pression, et possèdent une surface de moulage poreuse perméable à l'air, de préférence microporeuse perméable à l'air, qui présentent une couche ou surface contenant des particules métalliques, d'alliages métalliques, micrométalliques, des particules céramiques-métalliques et/ou céramiques-micrométalliques et/ou contenant des matières de charge très finement divisées, l'épaisseur moyenne de la couche métallique ou l'épaisseur des particules métalliques et/ou l'épaisseur des particules étant inférieure à 80 µm, de préférence inférieure à 60 µm, ou bien une surface de moulage non poreuse, en ce qu'au moins un élément de fermeture pour le moule de moussage ou un couvercle du moule de moussage est attribué à chaque moule d'emboutissage négatif et est soumis conjointement à au moins une partie du processus de mouvement guidé à la manière d'un carrousel ou bien est disposé de façon à pouvoir se fermer ou de façon à pouvoir y être accouplé, dans lequel l'élément de fermeture ou le couvercle du moule de moussage forme le moule de moussage, conjointement avec le moule d'emboutissage négatif et un support est appliqué sur le couvercle du moule de moussage, qui, sur sa surface orientée vers le moule d'emboutissage négatif, présente (en positif) la forme, des zones partielles de la forme ou encore des zones partielles de la surface du moule d'emboutissage négatif dans lequel, à proximité d'au moins un moule d'emboutissage négatif disposé à la manière d'un carrousel, est disposé un dispositif de transmission pour amener les éléments de fermeture ou le couvercle du moule de moussage et/ou le support avant l'introduction du mélange réactionnel de mousse synthétique.

7. Dispositif selon la revendication 6, caractérisé en ce que, à proximité d'au moins un moule d'emboutissage négatif, est disposé un dispositif d'éjection ou un dispositif d'enlèvement pour les objets finis et/ou un dispositif de traitement pour le moule d'emboutissage négatif, de préférence un dispositif de nettoyage et/ou d'application d'un agent de démoulage.

8. Dispositif selon les revendications 6 et 7, caractérisé en ce que le moule d'emboutissage négatif et/ou le moule entourant le moule d'emboutissage négatif est constitué par deux ou plusieurs parties séparables et aptes à être fermées.

9. Dispositif selon l'une ou plusieurs des revendications 6 à 8, caractérisé en ce que le couvercle du moule de moussage présente un profil superficiel en positif sur sa surface orientée vers le moule d'emboutissage négatif et/ou vers la bande en matière synthétique formée.
